# EUROPEAN PATENT SPECIFICATION

(11) **EP 3 648 262 B1**
(45) Date of publication and mention of the grant of the patent: **05.06.2024**
(21) Application number: 19205697.6
(22) Date of filing: 28.10.2019
(51) Int. Cl.: H01R 13/66

(54) **SOCKET-TYPE USB CHARGER**
STECKDOSENARTIGES USB-LADEGERÄT
CHARGEUR USB DE TYPE PRISE

(30) Priority: 29.10.2018 CN 201821761866 U
(43) Date of publication of application: 06.05.2020
(73) Proprietor: Schneider Electric Industries SAS, 92500 Rueil Malmaison (FR)
(72) Inventor: BI, Baoyun, Shanghai 201203 (CN); BRENGUIER, Jerome, 38470 L'Albenc (FR)
(74) Representative: Manitz Finsterwald Patent- und Rechtsanwaltspartnerschaft mbB

(56) References cited:
- EP-A1- 2 958 193
- CN-U- 201 498 743
- CN-U- 204 793 473
- US-B1- 9 746 138

## Description

### FIELD

Embodiments of the present disclosure generally relate to USB chargers, and more specifically, to socket-type USB chargers.

### BACKGROUND

Universal Serial Bus (USB) is an external bus standard, which was initially used for standardize connections and communications between computers and external devices. With the continuous enrichment of the electronic devices, USB interfaces are usually also available in cellphones, tablet computers and laptops. EP 2 958 193 A1 discloses a socket-type USB charger according to the preamble of claim 1.

### SUMMARY

When charging with a pluggable USB charger, one needs to carry the charger all the time. Furthermore, it may be necessary to replace plugs or utilize a changeover plug in different countries and regions to adapt to different socket types in these countries and regions.

The current USB charger, which usually only supports one type of voltage output, e.g., 5V output voltage, cannot be adapted to various electronic devices at the same time and has a poor universality. Moreover, the existing USB charger has a relatively low output power, which can only support low-power devices such as cellphones and tablet computers. Therefore, application range of the current USB charger is limited.

To at least partially solve the above and other potential problems, embodiments of the present disclosure provide a socket-type USB charger. Through the following description, it will be understood that the USB charger depicted herein is universal, easy to use and widely applied.

In accordance with a first aspect of the present disclosure, a socket-type USB charger is provided. The socket-type USB charger comprises: a USB charger body disposed in a wall, the USB charger body comprising a USB interface and supporting a USB PD protocol; an intermediate connection framework coupled to the USB charger body and securing the USB charger body onto the wall; and a panel coupled to the intermediate connection framework to cover the USB charger body and the intermediate connection framework.

In accordance with the first aspect of the present disclosure , the USB charger body further comprises a bottom shell and a front cover fitted with each other via a coupling structure to form an outer shell surrounding the USB charger body. As a result, elements of the USB charger body are arranged within the outer shell as a whole and are protected by the outer shell from damage.

In accordance with embodiments of the present disclosure, the USB charger is disposed on the wall to directly output a USB output voltage. Therefore, it is convenient for the users to charge the electronic devices with a unified USB universal cable without carrying a charger around. In addition, the USB charger, which supports the USB PD protocol, can provide different output voltages according to requirements of the electronic devices and further enhance the universality of the USB charger.

In some embodiments, the USB charger body comprises: a first control circuit board connected to an input power line to receive an input voltage; a second control circuit board coupled to the first control circuit board via a connector for delivering electricity and control signals to generate an output voltage. In such embodiments, elements of the USB charger body may be integrated respectively on the first control circuit board and the second circuit board which are further connected via the connector, to implement an integrated design of the USB charger body and reduce mounting space of the USB charger.

In some embodiments, the USB charger body further comprises an interface control circuit board with the USB interface disposed thereon, wherein the interface control circuit board is electrically connected to the second control circuit board by a flexible connection. In the embodiments, the position of the interface control circuit board may be set regardless of the position of the second control circuit board. In this way, the position of the USB interface can be flexibly configured.

In some embodiments, a snap arranged within the bottom shell is adapted to securely couple to an edge of the first control circuit board. Accordingly, the first control circuit board can be conveniently secured within the bottom shell. Furthermore, the simple structure of the snap can lower the fabricating costs of the bottom shell.

In accordance with the first aspect of the present disclosure, an external surface of the front cover is provided with a bump, on which a through-hole is arranged for the USB interface to pass through. As the bump has a thickness greater than that of the front cover, the support strength for the USB interface can be improved. As a result, the stability of the insertion between the USB cable connector and the USB interface can be enhanced.

In some embodiments, the intermediate connection framework comprises an opening coupled to at least one lateral surface of the USB charger body to secure the USB charger body. In the embodiments, the opening structure can be used to secure the USB charger body without blocking the USB interface, which simplifies the structure of the intermediate connection framework and further lowers its fabricating costs.

In some embodiments, the panel comprises a faucet into which the bump is inserted, to expose the USB interface from the panel. Therefore, the users can charge the electronic devices by conveniently inserting the USB cable connector into the faucet.

In some embodiments, the USB interface is a USB Type-C interface. The Type-C interface supports higher power transmission and thus can expand the application range of the USB charger.

In some embodiments, the USB charger body is disposed in a bottom case pre-mounted on the wall. In the embodiments, the USB charger can be easily mounted and the USB charger body can also be protected.

Through the following explanations of the example embodiments with reference to the drawings, features of the present disclosure become more obvious. It should be appreciated that the contents described in the Summary are not intended to define key or essential features of the embodiments of the present disclosure, or limit the scope of the present disclosure. Other features of the present disclosure will be understood more easily through the following description

### BRIEF DESCRIPTION OF THE DRAWINGS

Through the following detailed description of the example embodiments of the present disclosure with reference to the accompanying drawings, the above and other objectives, features and advantages of the present disclosure will become more apparent. In the example embodiments of the present disclosure, same reference signs represent same elements.
FIG. 1 illustrates an exploded view of a general structure of a USB charger in accordance with embodiments of the present disclosure; and
FIG. 2 illustrates an exploded view of a USB charger body in accordance with embodiments of the present disclosure.

Throughout the drawings, same or similar reference signs denote same or similar elements.

### DETAILED DESCRIPTION OF EMBODIMENTS

The present disclosure is now described with reference to several example embodiments. It should be understood that these embodiments are provided merely to enable those skilled in the art to have a better understanding and further implement the present disclosure, rather than restricting the scope of the technical solutions of the present disclosure in any manners.

As used herein, the term "includes" and its variants are to be read as open-ended terms that mean "includes, but is not limited to." The term "based on" is to be read as "based at least in part on." The terms "one embodiment" and "embodiment" are to be read as "at least one embodiment." The term "a further embodiment" is to be read as "at least a further embodiment." The terms "first", "second" and so on can refer to same or different objects. The following text also can include other explicit and implicit definitions. Definitions of the terms are consistent throughout the description unless indicated otherwise in the context.

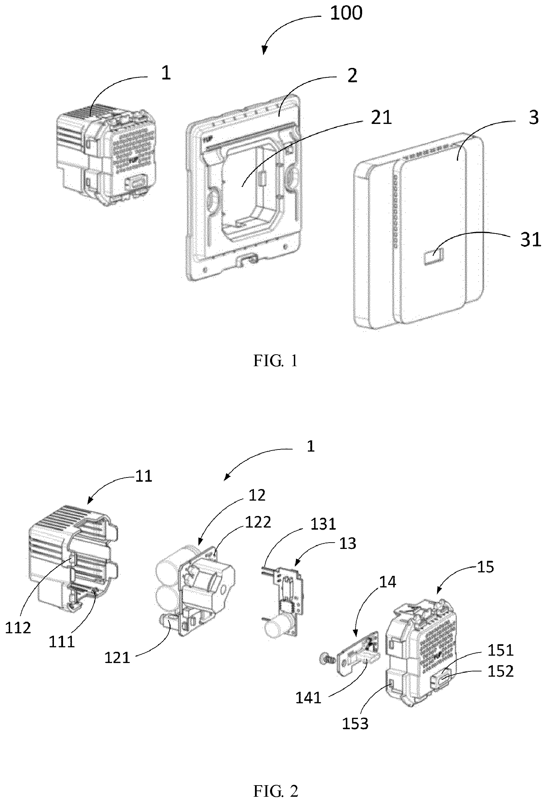

Embodiments of the present disclosure provide a USB charger 100 to solve or at least partially solve the above problems of the traditional USB charger. Some example embodiments are now described with reference to FIGS. 1 and 2.

Generally, as shown in FIG. 1, the USB charger disclosed herein comprises a USB charger body 1, an intermediate connection framework 2 and a panel 3. In accordance with embodiments of the present disclosure, the USB charger body 1, which is disposed inside a wall, comprises a USB interface 141 and supports a USB PD protocol. The USB PD protocol is a USB power transmission protocol supporting various voltage outputs, e.g., 5V, 9V, 12V, 15V and 20V etc., and thus has greater flexibility. For example, the wall may be a position, such as a building wall or a desk panel, where the charging can be easily performed. The USB charger body 1, which supports the USB power transmission protocol, can provide various output voltages in accordance with the requirements of the electronic devices and accordingly enhance universality of the USB charger 100.

The intermediate connection framework 2 is coupled to the USB charger body 1 to secure the USB charger body 1 onto the wall. The panel 3 is coupled to the intermediate connection framework 2 to cover the USB charger body 1 and the intermediate connection framework 2. Accordingly, the USB charger 100 on the wall directly outputs the USB output voltage. In this case, it is convenient for users who only need to insert a connector of the USB universal cable into the USB interface 141 to charge the electronic device, without carrying a charger around.

In some embodiments, a bottom case (not shown) for receiving the USB charger body 1 may be pre-mounted in the wall, to facilitate the mounting of the USB charger 100 and protect the USB charger body 1. For example, threaded holes may be provided on the bottom case and through-holes may be arranged on the intermediate connection framework 2. In this way, the intermediate connection framework 2 and the USB charger body 1 can be secured onto the bottom case in the wall with bolts passing through the through-holes.

In some embodiments, the USB interface 141 may be a Type-C interface. The USB Type-C interface supports higher power transmission up to 100W for example. Therefore, the USB charger body 1 can charge the devices with different power levels and expand the application range of the USB charger 100. It is to be understood that Type-A and Type-B interfaces may also be selected when the wide application range is not desired by the USB charger 100.

In some embodiments, as shown in FIG. 2, the USB charger body 1 may comprise a first control circuit board 12 and a second control circuit board 13. The first control circuit board 12 may have a power line connector 12 for connecting with an input power line to receive an input voltage. It is to be understood that the number of the control circuit boards is not limited to two. Specifically, three or more control circuit boards may be provided according to different arrangement requirements of the USB charger body 1.

In some embodiments, the second control circuit board 13 may be coupled to the first control circuit board 12 via the connector to generate an output voltage. At this moment, elements of the USB charger body may be integrated respectively on the first control circuit board 12 and the second circuit board 13 which are further connected via the connector. In this way, an integrated design of the USB charger body 1 can be achieved to reduce mounting space of the USB charger 100.

In some embodiments, the first control circuit board 12 may be provided with jacks 122 thereon, and the second control circuit board 13 may be provided with pins 131 for delivering electricity and controlling signals. Of course, it is to be understood that the positions where the jacks 122 and the pins 131 are disposed may be interchanged. The pins 131 may be inserted into the jacks 122 fixedly to secure the second control circuit board 13 and the first control circuit board 12 as a whole.

It is to be understood that the connection manner for the first control circuit board 12 and the second control circuit board 13 is not limited to the pins 131 and the jacks 122, any other suitable connection manners, such as snapping may also be used.

In some embodiments, the pins 131 and the jacks 122 may be secured by soldering, which is more reliable and withstands higher overvoltage. However, it is to be understood that any other suitable manners also can be adopted to secure the pins 131 and the jacks 122. For example, the pins 131 and the jacks 122 may be secured via a connector.

In some embodiments, three pins 131 and three jacks 122 are respectively provided as shown in FIG. 2. For example, the three pins may be separately used for transmitting control signals, supplying electricity and grounding. However, it is to be understood that the number of the pins 131 is not limited to three. In some alternative embodiments, four or more pins 131 may also be provided according to the control requirements of the USB charger body 1.

In some embodiments, the USB charger body 1 may also comprise an interface control circuit board 14 with the USB interface 141 disposed thereon, as shown in FIG. 2. The interface control circuit board 14 may be electrically connected to the second control circuit board 13 by a flexible connection. For example, the flexible connection may be a flexible cable. Accordingly, the position where the interface control circuit board 14 is set regardless of the position of the second control circuit board 13. In this way, the position of the USB interface 141 can be flexibly configured. However, it is to be understood that the connection manner between the interface control circuit board 14 and the second control circuit board 13 is not limited to flexible cable. For example, the interface control circuit board 14 may also be inserted on the second control circuit board 13.

In some embodiments, as shown in FIG. 2, the USB charger body 1 may also comprise a bottom shell 11 and a front cover 15, which are fitted with each other via a coupling structure to form an outer shell surrounding the USB charger body 1. In this case, elements of the USB charger body 1 may be arranged within the outer shell as a whole and are protected by the outer shell from damage. It is to be understood that the outer shell is not limited to a two-piece structure. For example, in some alternative embodiments, three-piece or four-piece splicing structures may also be adopted.

In some embodiments, the coupling structure may be claws 112 provided on the bottom shell 11 and slots 153 on the front cover 15. It is to be understood that the positions where the claw 112 and the slot 153 are set may be interchanged.

In some embodiments, a snap 111 may be disposed within the bottom shell 11 to be engaged with an edge of the first control circuit board 12, to secure the first control circuit board within the bottom shell 11. As a result, the first control circuit board 12 can be easily secured within the bottom shell 11. Moreover, the simple structure of the snap structure can further reduce the fabricating costs of the bottom shell 11. It is to be understood that the fixing manner of the first control circuit board 12 is not limited to the above. For example, in some alternative embodiments, the first control circuit board 12 may also be secured within the bottom shell 11 by other suitable means, such as insertion and bonding etc.

In some embodiments, as shown in FIG. 2, an external surface of the front cover 15 may be provided with a bump 15, on which a through-hole 152 may be disposed for the USB interface 141 to pass through. As the bump has a thickness greater than the front cover, the support strength for the USB interface 141 can be improved. In this way, the stability of the insertion between the USB cable connector and the USB interface 141 can be enhanced. It is to be understood that the support structure for the USB interface 141 is not limited to the above, any other structures suitable for supporting the USB interface 141 may also be disposed on the front cover 15.

In some embodiments, the intermediate connection framework 2 may have an opening 21, as shown in FIG. 2. Apart of the front cover 15 of the USB charger body 1 may be inserted into the opening 21. In this way, the opening 21 can be coupled to at least one lateral surface of the USB charger body 1. Therefore, the opening 21 can secure the USB charger body 1 without blocking the USB interface 141, which simplifies the structure of the intermediate connection framework 2 and lowers its fabricating costs. It is to be understood that the connection between the intermediate connection framework 2 and the USB charger body 1 is not limited to the above, any suitable connections which can secure the intermediate connection framework 2 and the USB charger 1 together without blocking the USB interface 141 are also feasible.

In some embodiments, the panel 3 may have a faucet 31, as shown in FIG. 2. The bump 151 may be inserted into the faucet 31 to expose the USB interface 141 from the panel 3. At this time, users can charge the electronic device by conveniently inserting the USB cable connector into the interface 141. It is to be understood that more than one faucet 31 may be provided to charge a plurality of electronic devices simultaneously.

It is to be appreciated that the numeric values herein are merely for illustrative and should not limit the scope of the present disclosure and may further be adjusted according to different applications.

It also should be understood that the above detailed embodiments of the present disclosure are provided only for illustrating or explaining the principles of the present disclosure by examples, rather than restricting the present disclosure.

## Claims

1. A socket-type USB charger, comprising:
a USB charger body (1) configured to be disposed in a wall, the USB charger body (1) comprising a USB interface (141) and supporting a USB PD protocol, wherein the USB charger body (1) further comprises a bottom shell (11) and a front cover (15) fitted with each other via a coupling structure to form an outer shell surrounding elements of the USB charger body (1); and
an intermediate connection framework (2) coupled to the USB charger body (1) and configured to secure the USB charger body (1) onto the wall;
the socket-type USB charger further comprising:
a panel (3) coupled to the intermediate connection framework (2) configured to cover the USB charger body (1) and the intermediate connection framework (2);
**characterized in that** an external surface of the front cover (15) is provided with a bump (151), on which a through-hole (152) is arranged and wherein the through-hole is configured for the USB interface (141) to pass through.

2. The socket-type USB charger of claim 1, **characterized in that**, the USB charger body (1) comprises:
a first control circuit board (12) connected to an input power line to receive an input voltage;
a second control circuit board (13) coupled to the first control circuit board (12) via a connector for delivering electricity and control signals to generate an output voltage.

3. The socket-type USB charger of claim 2, **characterized in that**, the USB charger body (1) further comprises an interface control circuit board (14) with the USB interface (141) disposed thereon, wherein the interface control circuit board (14) is electrically connected to the second control circuit board (13) by a flexible connection.

4. The socket-type USB charger of claim 2, **characterized in that**, a snap (111) arranged within the bottom shell (11) is adapted to securely couple to an edge of the first control circuit board (12).

5. The socket-type USB charger of claim 1, **characterized in that**, the intermediate connection framework (2) comprises an opening (21) coupled to at least one lateral surface of the USB charger body (1) to secure the USB charger body (1).

6. The socket-type USB charger of claim 1, **characterized in that**, the panel (3) comprises a faucet (31) into which the bump (151) is inserted, to expose the USB interface (141) from the panel (3).

7. The socket-type USB charger of claim 1, **characterized in that**, the USB interface (141) is a USB Type-C interface.

8. The socket-type USB charger of claim 1, **characterized in that**, the USB charger body (1) is disposed in a bottom case pre-mounted on the wall.

## Patentansprüche

1. Steckdosen-USB-Ladegerät, umfassend:
einen USB-Ladegerätkörper (1), der so konfiguriert ist, dass er in einer Wand angeordnet werden kann, wobei der USB-Ladegerätkörper (1) eine USB-Schnittstelle (141) umfasst und ein USB-PD-Protokoll unterstützt, wobei der USB-Ladegerätkörper (1) ferner eine untere Schale (11) und eine vordere Abdeckung (15) umfasst, die über eine Kopplungsstruktur aneinander angepasst sind, um eine äußere Schale zu bilden, die Elemente des USB-Ladegerätkörpers (1) umgibt; und
einen Zwischenverbindungsrahmen (2), der mit dem USB-Ladegerätkörper (1) gekoppelt und so konfiguriert ist, dass er den USB-Ladegerätkörper (1) an der Wand befestigen kann;
wobei das Steckdosen-USB-Ladegerät außerdem umfasst:
eine Platte (3), die mit dem Zwischenverbindungsrahmen (2) gekoppelt ist und so konfiguriert ist, dass sie den USB-Ladegerätkörper (1) und den Zwischenverbindungsrahmen (2) abdecken kann;
**dadurch gekennzeichnet, dass** eine äußere Oberfläche der vorderen Abdeckung (15) mit einer Erhebung (151) versehen ist, auf der ein Durchgangsloch (152) angeordnet ist, und wobei das Durchgangsloch so konfiguriert ist, dass die USB-Schnittstelle (141) hindurchgeführt werden kann.

2. Steckdosen-USB-Ladegerät nach Anspruch 1, **dadurch gekennzeichnet, dass** der USB-Ladegerätkörper (1) umfasst:
eine erste Steuerplatine (12), die mit einer Eingangsstromleitung verbunden ist, um eine Eingangsspannung zu empfangen;
eine zweite Steuerplatine (13), die über einen Verbinder mit der ersten Steuerplatine (12) gekoppelt ist, um Elektrizität und Steuersignale zur Erzeugung einer Ausgangsspannung zu liefern.

3. Steckdosen-USB-Ladegerät nach Anspruch 2, **dadurch gekennzeichnet, dass** der USB-Ladegerätkörper (1) ferner eine Schnittstellensteuerplatine (14) mit der darauf angeordneten USB-Schnittstelle (141) umfasst, wobei die Schnittstellensteuerplatine (14) mit der zweiten Steuerplatine (13) durch eine flexible Verbindung elektrisch verbunden ist.

4. Steckdosen-USB-Ladegerät nach Anspruch 2, **dadurch gekennzeichnet, dass** ein in der unteren Schale (11) angeordneter Schnappverschluss (111) zur sicheren Kopplung mit einer Kante der ersten Steuerplatine (12) angepasst ist.

5. Steckdosen-USB-Ladegerät nach Anspruch 1, **dadurch gekennzeichnet, dass** der Zwischenverbindungsrahmen (2) eine Öffnung (21) umfasst, die mit mindestens einer Seitenfläche des USB-Ladegerätkörpers (1) gekoppelt ist, um den USB-Ladegerätkörper (1) zu befestigen.

6. Steckdosen-USB-Ladegerät nach Anspruch 1, **dadurch gekennzeichnet, dass** die Platte (3) eine Muffe (31) umfasst, in die die Erhebung (151) eingeführt ist, um die USB-Schnittstelle (141) aus der Platte (3) hervorzuheben.

7. Steckdosen-USB-Ladegerät nach Anspruch 1, **dadurch gekennzeichnet, dass** die USB-Schnittstelle (141) eine USB-Typ-C-Schnittstelle ist.

8. Steckdosen-USB-Ladegerät nach Anspruch 1, **dadurch gekennzeichnet, dass** der USB-Ladegerätkörper (1) in einem an der Wand vormontierten unteren Gehäuse angeordnet ist.

## Revendications

1. Chargeur USB de type prise de courant, comprenant :
un corps de chargeur USB (1) configuré pour être disposé dans un mur, le corps de chargeur USB (1) comprenant une interface USB (141) et supportant un protocole USB PD, dans lequel le corps de chargeur USB (1) comprend en outre une coque de fond (11) et un couvercle avant (15) ajustés l'un à l'autre via une structure de couplage pour former une coque extérieure entourant des éléments du corps de chargeur USB (1) ; et
un cadre de connexion intermédiaire (2) couplé au corps de chargeur USB (1) et configuré pour fixer le corps de chargeur USB (1) sur le mur ;
le chargeur USB de type prise de courant comprenant en outre :
un panneau (3) couplé au cadre de connexion intermédiaire (2), configuré pour couvrir le corps de chargeur USB (1) et le cadre de connexion intermédiaire (2) ;
**caractérisé en ce qu'**une surface externe du couvercle avant (15) est pourvue d'une bosse (151) sur laquelle un trou traversant (152) est disposé et dans lequel le trou traversant est configuré pour permettre à l'interface USB (141) de passer à travers.

2. Chargeur USB de type prise de courant selon la revendication 1, **caractérisé en ce que** le corps de chargeur USB (1) comprend :
une première carte de circuit de commande (12) connectée à une ligne d'alimentation d'entrée pour recevoir une tension d'entrée ;
une seconde carte de circuit de commande (13) couplée à la première carte de circuit de commande (12) via un connecteur pour fournir de l'électricité et des signaux de commande afin de générer une tension de sortie.

3. Chargeur USB de type prise de courant selon la revendication 2, **caractérisé en ce que** le corps de chargeur USB (1) comprend en outre une carte de circuit de commande d'interface (14) sur laquelle est disposée l'interface USB (141), dans lequel la carte de circuit de commande d'interface (14) est reliée électriquement à la seconde carte de circuit de commande (13) par une connexion flexible.

4. Chargeur USB de type prise de courant selon la revendication 2, **caractérisé en ce qu'**un cliquet (111) disposé à l'intérieur de la coque de fond (11) est adapté à être couplé fermement à un bord de la première carte de circuit de commande (12).

5. Chargeur USB de type prise de courant selon la revendication 1, **caractérisé en ce que** le cadre de connexion intermédiaire (2) comprend une ouverture (21) couplée à au moins une surface latérale du corps de chargeur USB (1) pour fixer le corps de chargeur USB (1).

6. Chargeur USB de type prise de courant selon la revendication 1, **caractérisé en ce que** le panneau (3) comprend un orifice (31) dans lequel la bosse (151) est insérée, pour exposer l'interface USB (141) à partir du panneau (3).

7. Chargeur USB de type prise de courant selon la revendication 1, **caractérisé en ce que** l'interface USB (141) est une interface USB de type C.

8. Chargeur USB de type prise de courant selon la revendication 1, **caractérisé en ce que** le corps de chargeur USB (1) est disposé dans un boîtier de fond prémonté sur le mur.
